# FASCICULE DE BREVET EUROPEEN

(11) **EP 1 421 886 B1**
(45) Date de publication et mention de la délivrance du brevet: **24.05.2006**
(21) Numéro de dépôt: 03292794.9
(22) Date de dépôt: 06.11.2003
(51) Int. Cl.: A47J 45/02

(54) **Face avant d'un espace de rangement de cuisinière**
Frontteil eines Stauraumes von einem Kochgerät
Front-end panel of a storage area of a cooking appliance

(30) Priorité: 12.11.2002 FR 0214085
(43) Date de publication de la demande: 26.05.2004
(73) Titulaire: Brandt Industries, 92500 Rueil Malmaison (FR)
(72) Inventeur: Pitard, Sylvain, 45000 Orleans (FR)
(74) Mandataire: Hartmann, Jean-Luc

(56) Documents cités:
- DE-U- 9 101 829
- DE-U- 9 204 531
- DE-U- 29 718 550
- FR-A- 2 246 248

## Description

La présente invention concerne une face avant d'un espace de rangement de cuisinière.

Une cuisinière comporte un four et une plaque de cuisson aménagée sur la face supérieure du four. Généralement, sous le four, est prévu un espace de rangement destiné à recevoir des accessoires tels par exemple une lèchefrite, des moules à gâteau, des plats, une broche, etc.... Ces accessoires sont simplement posés dans cet espace de rangement. Lorsque ce dernier contient une broche, celle-ci gêne souvent le rangement ou la sortie des autres accessoires.

La présente invention a pour point de départ l'idée originale de rechercher une solution pour faciliter le rangement d'accessoires dans l'espace de rangement ou bien pour les extraire de cet espace, sans être gêné par la broche.

Le document FR-2 246 248 révèle un dispositif de fixation pour tiges de brochettes sur la broche d'un gril tournant. Ce dispositif comporte des disques de fixation munis d'un moyeu destiné à être traversé par la broche ainsi qu'une languette portant un moyen de serrage par pincement.

La présente invention a alors pour but de fournir des moyens permettant le rangement d'une broche sans que celle-ci ne gêne l'entrée ou la sortie d'accessoires dans un espace de rangement prévu habituellement sous une cuisinière et intégré à celle-ci.

A cet effet, elle propose un dispositif de fixation d'une broche, la broche comportant une tige et une poignée.

Selon l'invention, ce dispositif comporte au moins deux dispositifs élastiques placés à distance l'un de l'autre, chaque dispositif élastique comporte un support présentant un coude destiné à recevoir la tige de la broche ainsi qu'au moins une patte élastique pour contraindre la tige de la broche en appui sur le support, la patte élastique présentant un bossage formant butée lors du retrait de la broche de son support.

Un tel dispositif de fixation permet de correctement maintenir une broche et est facilement intégrable à une face avant d'un espace de rangement d'une cuisinière. Cette face avant peut être par exemple une porte basculante ou bien la face avant d'un tiroir et le dispositif selon l'invention est alors placé de préférence sur la face avant de façon à se trouver dans l'espace de rangement en position fermée de la porte basculante ou du tiroir. La broche est alors maintenue prisonnière lorsqu'elle est en place sur son support grâce notamment au bossage et ne peut tomber accidentellement.

Dans une forme de réalisation préférée du dispositif de fixation selon l'invention, le support comporte deux pattes de forme correspondant à la section de la tige de la broche, ces pattes formant support sont espacées l'une de l'autre dans le sens longitudinal de la tige de la broche, et la patte élastique fait face aux deux pattes formant support en étant disposé entre ces deux pattes. Grâce aux deux pattes formant support la broche est bien maintenue en place et la patte élastique maintient la broche en appuyant celle-ci entre les deux pattes formant support. On a ainsi un appui symétrique. Dans cette forme de réalisation préférée, on peut prévoir que les pattes formant support et la patte élastique ne forment qu'une seule pièce en tôle. Ceci permet de limiter les coûts de fabrication du dispositif élastique. Cette pièce en tôle présente avantageusement un pied reliant les trois pattes qui sont obtenues par deux découpes parallèles puis pliage. Pour fixer le dispositif élastique du dispositif de fixation selon l'invention, on peut prévoir par exemple que le pied de la pièce en tôle présente des moyens d'encliquetage.

La présente invention concerne également une face avant d'un espace de rangement d'une cuisinière domestique, caractérisée en ce qu'elle est munie d'un dispositif de fixation tel que décrit ci-dessus.

Une telle face avant présente par exemple un logement en forme de fente recevant un dispositif élastique du dispositif de fixation. L'invention propose aussi une forme de réalisation avantageuse dans laquelle le logement est réalisé en prévoyant sur la face avant une pièce allongée dont la section présente une forme de U, les bords correspondant aux extrémités libres des branches du U se trouvant en contact avec la face avant. Dans cette forme de réalisation, lorsque la face avant comporte un dispositif de fixation muni d'un pied présentant des moyens d'encliquetage, la pièce allongée de section en U présente quant à elle de préférence des moyens d'encliquetage complémentaires. La pièce allongée dont il est question ici peut être par exemple fixée sur la face avant (éventuellement par soudage si la pièce allongée et la face avant sont métalliques) ou bien elle peut être intégrée à celle-ci, notamment dans le cas où la face avant est réalisée par moulage d'une matière synthétique.

Une face avant selon l'invention est par exemple montée pivotante autour d'un axe horizontal de manière à former une porte pivotante. Il peut toutefois également s'agir de la face avant d'un tiroir, d'une porte pivotante autour d'un axe verticale ou de tout autre type de face avant d'un espace de rangement d'une cuisinière.

D'autres détails et avantages de l'invention ressortiront mieux de la description qui suit, faite en référence au dessin schématique annexé sur lequel :
La figure 1 est une vue en perspective d'une porte pivotante destinée à fermer un espace de rangement d'une cuisinière,
La figure 2 est une vue de face de la porte de la figure 1,
La figure 3 est une vue en coupe selon la ligne de coupe III-III de la figure 2, et
La figure 4 est une vue en perspective et à échelle agrandie d'un dispositif de fixation monté sur la porte représentée sur les figures 1 à 3.

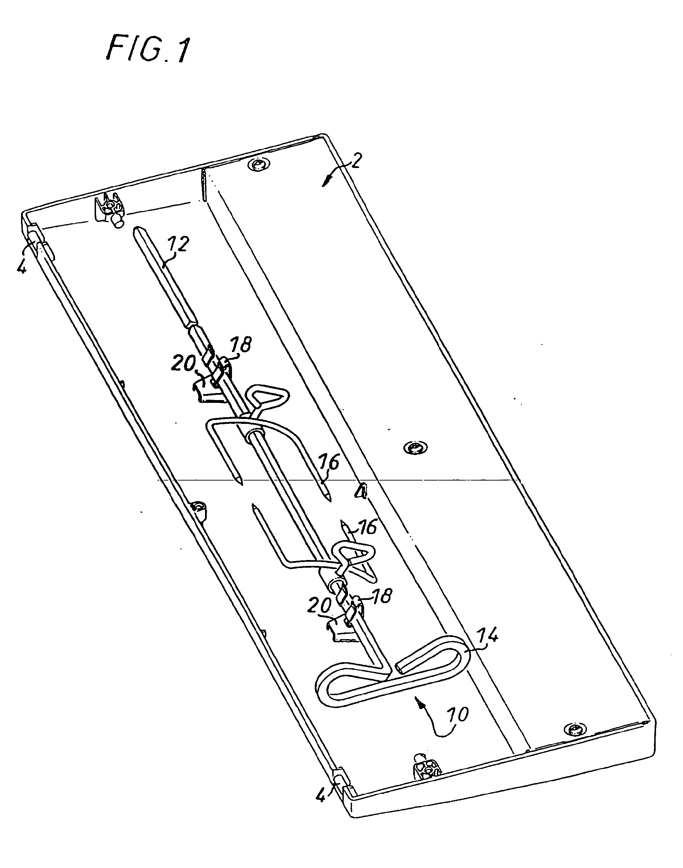

Les figures 1 à 3 représentent une porte 2 pour l'accès à un espace de rangement ménagé dans une cuisinière domestique. Généralement, une telle cuisinière comporte un four de cuisson, le plus souvent électrique ou à gaz, associé à une plaque de cuisson disposée au-dessus du four. En dessous du four se trouve un espace de rangement dont l'utilisateur de la cuisinière se sert généralement pour loger divers éléments dont il se sert habituellement avec le four. Il s'agit par exemple d'une lèchefrite, de moules à gâteau, de plats allant au four et aussi d'une broche, comme celles livrées avec la plupart des fours de cuisson domestiques.

Dans le cas de figure représenté au dessin, l'espace de rangement de la cuisinière (non représentée) est fermé par la porte 2. Cette dernière comporte deux axes 4 destinés à coopérer avec des paliers réalisés sur le bâti de la cuisinière pour permettre l'ouverture et la fermeture de la porte 2 par pivotement autour de ces axes 4.

La porte 2 présente une forme générale rectangulaire allongée. Les axes 4 se trouvent le long d'un grand côté de la porte 2. Ils définissent un axe de pivotement pour la porte 2 qui, dans la position d'utilisation de la cuisinière, est sensiblement horizontal. La porte 2 peut être réalisée par exemple en tôle ou bien moulée en matière synthétique.

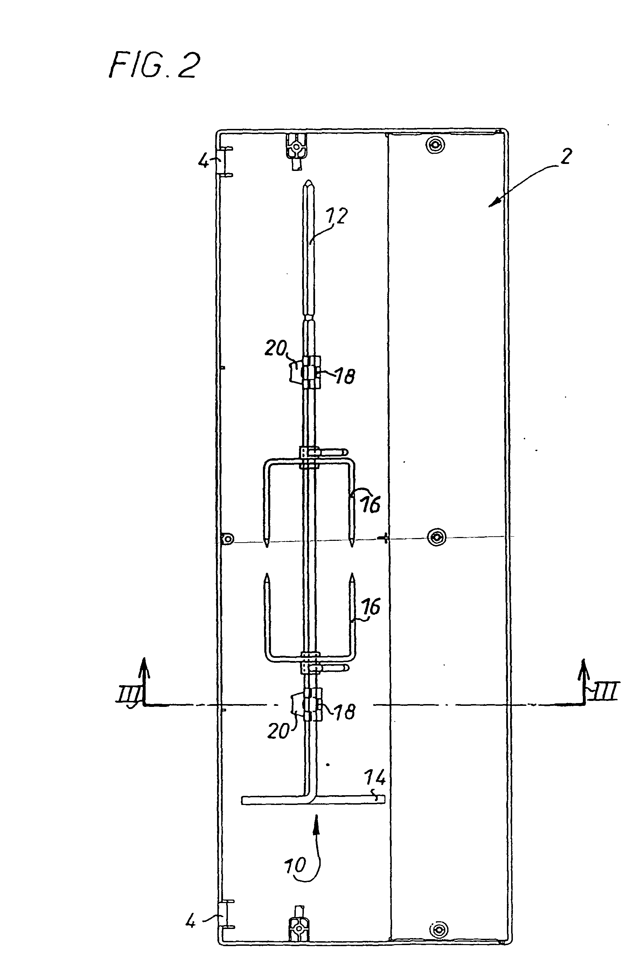

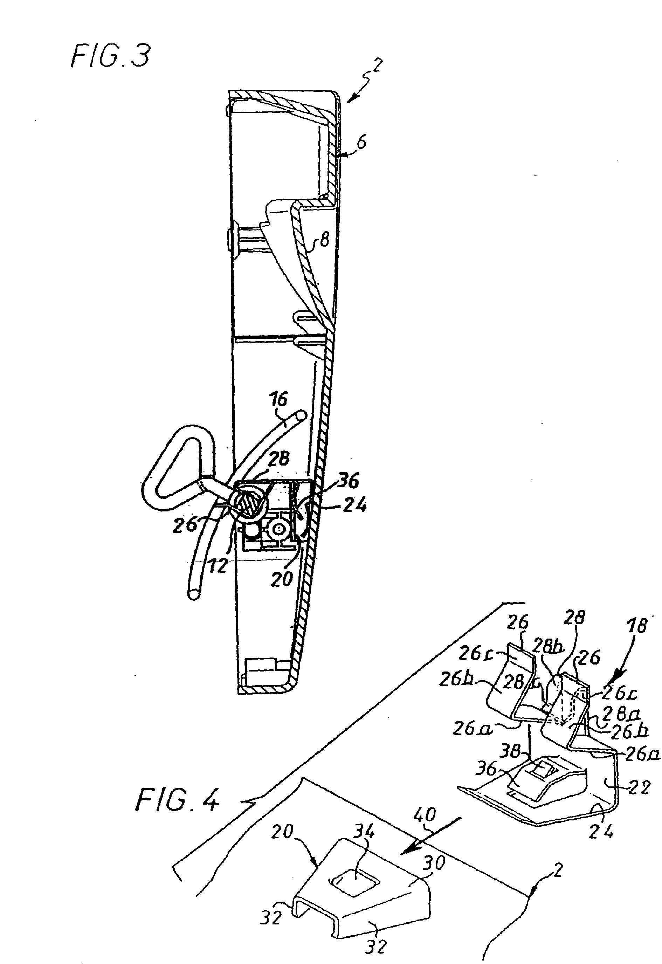

La porte 2 constitue la face avant de l'espace de rangement de la cuisinière. Elle présente une paroi interne que l'on voit sur les figures 2 et 3 et une paroi externe 6 qui est la paroi visible de la porte 2 dans sa position fermée. Une poignée 8 est réalisée dans cette paroi externe 6 pour faciliter l'ouverture de la porte 2. Cette poignée est constituée par un renfoncement réalisé dans la paroi externe 6. Toutefois, toute autre forme de réalisation de la poignée peut être envisagée. On remarque en outre que cette poignée est optionnelle.

De façon originale, la paroi interne de la porte 2 est pourvue de moyens de fixation pour une broche. Sur les figures 1 à 3, la porte 2 est montrée avec une broche 10. Cette dernière comporte une tige 12 présentant à l'une de ses extrémités une poignée 14. Sur la tige 12 sont montées coulissantes des fourchettes 16 destinées à maintenir une pièce de viande (ou autre) embrochée sur la tige 12 de la broche. Une vis de serrage permet le maintien de chaque fourchette 16 sur la tige 12.

Dans la forme de réalisation représentée, la tige 12 et la poignée 14 ne forment qu'une seule pièce réalisée à partir d'une barre de section carrée. Une extrémité de cette barre est repliée pour former la poignée 14.

La broche 10 est maintenue sur la paroi interne de la porte 2 à l'aide de deux dispositifs élastiques 18. Chacun de ces dispositifs élastiques 18 est monté sur la porte 2 à l'aide d'une pièce-support 20. La figure 4 montre plus en détails et à échelle agrandie un dispositif élastique 18 et sa pièce-support 20. Cette dernière peut être une pièce distincte de la porte 2 ou bien intégrée à cette porte de manière à ne former avec elle qu'une seule pièce. Si la porte 2 est en tôle, la pièce-support 20 peut être par exemple elle aussi en tôle et être soudée sur la face intérieure de la porte 2 et si la porte 2 est en matière synthétique, la pièce support 20 peut être intégrée à la porte 2 en étant réalisée lors du moulage de la porte. Dans ces deux cas, on a fonctionnellement deux pièces distinctes (la pièce-support 20 et la porte 2) et dans la suite de la description on considère que la pièce-support 20 est distincte de la porte 2 même si elle ne forme qu'une seule pièce moulée (ou obtenue par tout autre procédé) avec elle.

Le dispositif élastique (figure 4) comporte une base 22 sensiblement plane, portant d'un côté trois pattes et d'un autre côté un pied 24 destiné à coopérer avec la pièce-support 20.

Le dispositif élastique 18 est réalisé par découpe et pliage d'une tôle. La forme initiale de cette tôle est sensiblement rectangulaire allongée. Dans une extrémité de cette tôle, sont réalisées deux découpes longitudinales permettant ainsi de réaliser les trois pattes du dispositif élastique. On a ainsi trois pattes disposées les unes à côté des autres : deux pattes latérales 26 et une patte centrale 28.

Les deux pattes latérales 26 sont destinées à servir de support à la broche 10, plus particulièrement à la tige 12 de celle-ci. Ces deux pattes latérales 26 sont identiques.

Chaque patte latérale 26 présente tout d'abord une première branche 26a inclinée par rapport à la base 22, par exemple d'environ 45°. Elle comporte ensuite une seconde branche 26b coudée à angle droit par rapport à la première branche 26a. Le pli entre la première branche 26a et la seconde branche 26b est réalisé dans le sens opposé du pli réalisé entre la base 22 et la première branche 26a. Ces deux branches 26a, b sont destinées à servir de face d'appui à deux faces de la tige 12 de section carrée.

Pour faciliter la mise en place de la tige 12 dans le coude formé par les branches 26a, b, il est prévu d'incliner légèrement l'extrémité libre de chaque patte latérale 26 par rapport à la seconde branche 26b. Le pliage est ici réalisé dans le sens opposé du pliage entre les première et seconde branches de la patte latérale 26. Chaque patte latérale 26 présente ainsi une extrémité repliée 26c.

La patte centrale 28 est conformée en patte élastique faisant face aux deux pattes latérales 26 servant de support à la tige 12 de la broche 10. Cette tige vient reposer sur les pattes latérales 26 du dispositif élastique 18 et la patte centrale 28 élastique est prévue pour maintenir la tige 12 de cette broche en appui sur ces pattes supports formées par les pattes latérales 26.

La patte centrale 28 présente une branche 28a sensiblement coplanaire avec la base 22. A l'extrémité de cette branche 28a, la patte centrale 28 présente un repli à 180° formant ainsi un bossage 28b. La patte centrale 28 se termine à son extrémité libre par une portion 28c terminale sensiblement parallèle aux branches 26b des pattes latérales 26 correspondantes.

Les dimensions de la patte centrale 28 et des pattes latérales 26 sont déterminées en fonction des dimensions de la broche qui doit prendre place dans le dispositif de fixation 18. Ainsi, la distance séparant la portion terminale 28c de la seconde branche 26b (qui sont toutes deux sensiblement parallèles) est légèrement inférieure à la longueur d'un côté d'un carré de la section de la tige 12 correspondante lorsque le dispositif de fixation est au repos, c'est-à-dire qu'il ne porte pas de broche 10. Le pli réalisé entre le bossage 28b et la portion 28c terminale de la patte centrale 28 est également positionné de telle sorte que, lorsque le dispositif élastique 18 reçoit la tige 12 d'une broche 10, l'arête de la tige diamétralement opposée à l'arête se trouvant au niveau du pli à angle droit réalisé entre les première et seconde branches 26a et 26b des pattes latérales 26 se trouve au niveau du pli entre le bossage 28b et la portion 28c terminale.

Comme déjà mentionné plus haut, le dispositif élastique 18 est maintenu sur la paroi interne de la porte 2 à l'aide de la pièce-support 20. Cette dernière comporte une embase 30 sensiblement plane de forme trapézoïdale. Les bords inclinés de cette embase sont repliés à environ 90° et forment ainsi des branches latérales 32. La pièce-support 20 présente ainsi la forme d'un étrier. Comme représenté sur les figures 1 à 4, cette pièce-support 20 est intégrée à la paroi interne de la porte 2 et ne forme avec elle qu'une seule pièce obtenue par moulage d'une matière synthétique. Ainsi, on réalise un logement en forme de fente entre la paroi interne de la porte 2 et l'embase 30 de la pièce-support 20.

On remarque sur la figure 4 qu'une fenêtre 34 est réalisée sensiblement au centre de l'embase 30 de la pièce-support 20.

Le pied 24 du dispositif élastique 18 est destiné à venir prendre place entre l'embase 30 de la pièce-support 20 et la paroi interne de la porte 2. Le pied 24 est replié sensiblement à angle droit par rapport à l'embase 22 du dispositif élastique 18. Le pied 24 se trouve du même côté de l'embase 22 que les pattes latérales 26 et la patte centrale 28. La forme de ce pied correspond sensiblement à la forme de l'embase 30. Ainsi, on réalise un détrompeur évitant l'introduction du pied 24 dans le mauvais sens dans la fente formée entre l'embase 30 et la paroi interne de la porte 2.

Pour faciliter l'introduction du pied 24 dans son logement et avoir un meilleur guidage du pied 24 dans la pièce-support 20 lors de la mise en place du dispositif élastique 18, on peut prévoir, comme représenté sur la figure 4, que l'extrémité libre du pied 24 est légèrement inclinée vers les pattes latérales 26 et centrale 28.

L'embase 22 du dispositif de fixation porte une languette 36 découpée dans le pied 24. Cette languette 36 s'étend sensiblement parallèlement au pied 24. La distance séparant cette languette 36 du pied 24 correspond sensiblement à la hauteur des branches 32.

Au milieu de la languette 36 est réalisée une butée 38. Dans la forme de réalisation représentée au dessin, cette butée 38 prend la forme d'une rampe qui autorise l'introduction du pied 24 et de la languette 36 dans leur logement sous la pièce-support 20, qui vient prendre place dans la fenêtre 34 lorsque le pied 24 est dans sa position montée dans la pièce-support 20 et qui empêche le retrait de la languette 36, et donc aussi du pied 24, hors de son logement en venant buter contre un bord de la fenêtre 34. Ainsi, on réalise un encliquetage du dispositif élastique 18 dans la pièce-support 20 et donc sur la paroi interne de la porte 2.

Comme on peut le remarquer, le dispositif de fixation est de conception simple et permet une réalisation à un prix de revient relativement peu élevé. Un tel dispositif de fixation peut être adapté sur quasiment toutes les portes d'un espace de rangement d'une cuisinière. Il suffit en effet de prévoir deux pièces-supports 20 en deux points distants prédéterminés sur la paroi interne de cette porte 2. On introduit alors par la suite le pied 24 d'un dispositif élastique 18 dans chaque logement en forme de fente défini entre l'embase 30 de la pièce-support 20 et la paroi interne de la porte 2. Le pied 24 ne peut être introduit que dans un seul sens dans son logement comme il a été vu plus haut, grâce à la forme trapézoïdale du pied 24 et de l'embase 30. La flèche 40 montre le sens d'introduction du pied 24 dans son logement délimité par la pièce-support 20. Lorsque le dispositif élastique 18 est en place dans la pièce-support 20, les bords inclinés du pied 24 viennent en butée contre les branches 32 de la pièce-support 20. Le pied 24 est en appui contre la paroi interne de la porte 2 et la languette 36, qui est élastique, vient en appui contre l'embase 30 de la pièce-support 20. La butée 38 se trouve dans la fenêtre 34 de l'embase 30.

Une fois les deux dispositifs élastiques 18 en place sur la porte 2, une broche 10 peut être mise en place. La tige 12 de la broche est alors amenée en appui sur les extrémités repliées 26c des pattes latérales 26. Bien entendu, les pièces-supports 20 sont fixées sur la paroi interne de la porte 2 de telle sorte que les quatre pattes latérales 26 soient alignées. Il en va de même pour les deux pattes centrales 28.

La broche 10 est alors poussée jusqu'à venir en appui contre la seconde branche 26b des pattes latérales 26. Le bossage 28b des pattes centrales gêne ce mouvement mais grâce à l'élasticité des pattes centrales 28 et la forme arrondie du bossage 28b ce mouvement est possible. Lorsqu'alors une arête de la tige 12 vient se loger au niveau du pli se trouvant entre les premières 26a et secondes 26b branches des pattes latérales 26 l'arête diamétralement opposée à cette première arête se trouve au niveau des plis réalisés entre les bossages 28b et la portion terminale 28c des pattes centrales 28. Grâce à l'élasticité des pattes centrales 28, qui sont légèrement déformées lorsque la tige 12 de la broche se trouve dans la position décrite précédemment, la portion terminale 28c de chaque patte centrale 28 vient maintenir la tige 12 de la broche 10 en appui contre les branches 26a et 26b des pattes latérales 26. Les bossages 28b des pattes centrales 28 empêchent la broche de tomber et bloquent celle-ci sur les pattes 26 servant ici de support à la broche. Le dispositif élastique 18 est un dispositif symétrique. L'effort exercé par la patte centrale 28 se répartit également sur les deux pattes latérales 26 correspondantes.

On réalise ainsi un dispositif de fixation qui permet de maintenir une broche sur une porte d'un espace de rangement d'une cuisinière. La broche ne gêne alors plus le retrait ou le rangement des autres accessoires se trouvant à l'intérieur de l'espace de rangement.

La présente invention ne se limite pas à la forme de réalisation décrite ci-dessus à titre d'exemple non limitatif. Elle concerne également toutes les variantes de réalisation à la portée de l'homme du métier.

Ainsi, la description faite ci-dessus considère que les dispositifs de fixation sont montés sur une porte mais la présente invention peut se généraliser à toute face avant destinée à une cuisinière. Elle s'applique également par exemple à un panneau avant d'un tiroir.

La forme du dispositif élastique décrit plus haut n'est pas limitative, tant au niveau des pattes qu'au niveau de la base et du pied. On peut aussi imaginer un dispositif élastique en plusieurs pièces, par exemple un support et une patte élastique.

La forme de réalisation préférée décrite plus haut prévoit deux pattes supports entre lesquelles, et face auxquelles, se trouve une patte élastique. Un dispositif avec une seule patte support et une patte élastique peut aussi être envisagé. La patte élastique fait face à la patte support, avec ou sans décalage longitudinal par rapport à la tige de la broche. De nombreuses autres configurations (avec deux pattes élastiques par exemple) sont envisageables car on peut faire varier et le nombre des pattes supports et celui des pattes élastiques.

Pour la fixation du dispositif élastique sur la face avant, de multiples solutions peuvent être envisagées sans sortir du cadre de l'invention. Ainsi par exemple, le dispositif élastique pourrait être soudé, vissé, riveté... sur la porte. Cette fixation peut être réalisée directement ou avec des pièces de fixation.

## Revendications

1. Dispositif de fixation d'une broche (10), la broche comportant une tige (12) et une poignée (14), **caractérisé en ce qu'**il comporte au moins deux dispositifs élastiques (18) placés à distance l'un de l'autre, **en ce que** chaque dispositif élastique (18) comporte un support (26) présentant un coude destiné à recevoir la tige (12) de la broche ainsi qu'au moins une patte élastique (28) pour contraindre la tige de la broche en appui sur le support (26), et **en ce que** la patte élastique (28) présente un bossage (28b) formant butée lors du retrait de la broche (10) de son support (26).

2. Dispositif de fixation selon la revendication 1, **caractérisé en ce que** le support comporte deux pattes (26) de forme correspondant à la section de la tige (12) de la broche, **en ce que** ces pattes (26) formant support sont espacées l'une de l'autre dans le sens longitudinal de la tige de la broche, et **en ce que** la patte élastique (28) fait face aux deux pattes (26) formant support en étant disposé entre ces deux pattes (26).

3. Dispositif de fixation selon la revendication 2, **caractérisé en ce que** les pattes (26) formant support et la patte élastique (28) ne forment qu'une seule pièce en tôle.

4. Dispositif de fixation selon la revendication 3, **caractérisé en ce que** la pièce en tôle présente un pied (24) reliant les trois pattes (26, 28) qui sont obtenues par deux découpes parallèles puis pliage.

5. Dispositif de fixation selon la revendication 4, **caractérisé en ce que** le pied (24) de la pièce en tôle présente des moyens d'encliquetage (38).

6. Face avant (2) d'un espace de rangement d'une cuisinière domestique, **caractérisée en ce qu'**elle est munie d'un dispositif de fixation selon l'une des revendications 1 à 5.

7. Face avant selon la revendication 6, **caractérisée en ce qu'**elle présente un logement en forme de fente recevant un dispositif élastique (18) du dispositif de fixation.

8. Face avant selon la revendication 7, **caractérisée en ce que** le logement est réalisé en prévoyant sur la face avant une pièce (20) allongée dont la section présente une forme de U, les bords (32) correspondant aux extrémités libres des branches du U se trouvant en contact avec la face avant (2).

9. Face avant selon la revendication 8, **caractérisé en ce qu'**elle comporte un dispositif de fixation selon la revendication 5 et **en ce que** la pièce (20) allongée de section en U présente des moyens d'encliquetage (34) complémentaires.

10. Face avant selon l'une des revendications 6 à 9, **caractérisée en ce qu'**elle est montée pivotante autour d'un axe horizontal de manière à former une porte pivotante.

## Claims

1. Device for fixing a spit (10), the spit comprising a skewer (12) and a handle (14), **characterised in that** it comprises at least two elastic devices (18) placed at a distance from each other, **in that** each elastic device (18) comprises a support (26) having an elbow intended to receive the skewer (12) of the spindle and at least one elastic lug (28) for restraining the spit skewer in abutment on the support (26), and **in that** the elastic lug (28) has a protrusion (28b) forming a stop when the spit (10) is withdrawn from its support (26).

2. Fixing device according to claim 1, **characterised in that in that** the support comprises two lugs (26) with a shape corresponding to the cross-section of the spit skewer (12), **in that** these lugs (26) forming a support are spaced apart from each other in the longitudinal direction of the spit skewer, and **in that** the elastic lug (28) faces the two lugs (26) forming a support while being disposed between these two lugs (26).

3. Fixing device according to claim 2, **characterised in that** the lugs (26) forming a support and the elastic lug (28) form only a single piece made from sheet metal.

4. Fixing device according to claim 3, **characterised in that** the piece made from sheet metal has a foot (24) connecting the three lugs (26, 28), which are obtained by two parallel cuts and then bending.

5. Fixing device according to claim 4, **characterised in that** the foot (24) of the piece made from sheet metal has snapping-on means (38).

6. Front face (2) of a storage space in a domestic cooker, **characterised in that** it is provided with a fixing device according to one of claims 1 to 5.

7. Front face according to claim 6, **characterised in that** it has a housing in the form of a slot receiving an elastic device (18) of the fixing device.

8. Front face according to claim 7, **characterised in that** the housing is produced by providing on the front face an elongate part (20), the cross-section of which has a U shape, the edges (32) corresponding to the free ends of the arms of the U being situated in contact with the front face (2).

9. Front face according to claim 8, **characterised in that** it comprises a fixing device according to claim 5 and **in that** the elongate part (20) with a U-shaped cross-section has complementary snapping-on means (34).

10. Front face according to one of claims 6 to 9, **characterised in that** it is mounted so as to pivot about a horizontal axis so as to form a pivoting door.

## Patentansprüche

1. Vorrichtung zum Befestigen eines Spießes (10), wobei der Spieß eine Stange (10) und einen Griff (14) umfasst, **dadurch gekennzeichnet, dass** sie wenigstens zwei elastische Vorrichtungen (18) umfasst, die voneinander entfernt angeordnet sind, dass jede elastische Vorrichtung eine Halterung (26) umfasst, die ein Winkelstück zur Aufnahme der Spießstange (12) sowie eine elastische Lasche (28) zum Vorspannen der Spießstange in Anlage an der Halterung (26) aufweist, und dass die elastische Lasche (28) einen Vorsprung (28b) aufweist, der einen Anschlag bildet, wenn der Spieß (10) aus seiner Halterung zurückgezogen wird.

2. Befestigungsvorrichtung nach Anspruch 1, **dadurch gekennzeichnet, dass** die Halterung zwei Laschen (26) aufweist, deren Form der Querschnittsform der Spießstange (12) entspricht, dass diese eine Halterung bildenden Laschen (26) in Längsrichtung der Spießstange voneinander beabstandet sind, und dass die elastische Lasche (28) den beiden eine Halterung bildenden Laschen (26) gegenüberliegt, indem sie zwischen diesen beiden Laschen (26) angeordnet ist.

3. Befestigungsvorrichtung nach Anspruch 2, **dadurch gekennzeichnet, dass** die eine Halterung bildenden Laschen (26) und die elastische Lasche (28) nur ein Blechteil bilden.

4. Befestigungsvorrichtung nach Anspruch 3, **dadurch gekennzeichnet, dass** das Blechteil einen Fuß (24) aufweist, der die drei Laschen (26, 28) verbindet, die durch zwei parallele Ausschnitte und dann durch Falten erhalten sind.

5. Befestigungsvorrichtung nach Anspruch 4, **dadurch gekennzeichnet, dass** der Fuß (24) des Blechteils Einrastmittel (38) aufweist.

6. Frontseite (2) eines Stauraumes eines Haushaltsherds, **dadurch gekennzeichnet, dass** sie mit einer Befestigungsvorrichtung nach einem der Ansprüche 1 bis 5 versehen ist.

7. Frontseite nach Anspruch 6, **dadurch gekennzeichnet, dass** sie eine schlitzförmige Aufnahme für eine elastische Vorrichtung (18) der Befestigungsvorrichtung aufweist.

8. Frontseite nach Anspruch 7, **dadurch gekennzeichnet, dass** die Aufnahme **dadurch** ausgebildet ist, dass an der Frontseite ein längliches Teil (20) mit U-förmigem Querschnitt vorgesehen ist, wobei die Ränder (32) den freien Enden der U-Schenkel entsprechen, die in Berührung mit der Frontseite (2) stehen.

9. Frontseite nach Anspruch 8, **dadurch gekennzeichnet, dass** sie eine Befestigungsvorrichtung nach Anspruch 5 umfasst, und dass das längliche Teil (20) mit U-förmigem Querschnitt komplementäre Einrastmittel (34) bildet.

10. Frontseite nach einem der Anspruche 6 bis 9, **dadurch gekennzeichnet, dass** sie drehbar um eine horizontale Achse angebracht ist, so dass sie eine Drehtür bildet.
